(19) Europäisches Patentamt
European Patent Office
Office européen des brevets

(11) **EP 2 000 910 A2**

(12) **EUROPÄISCHE PATENTANMELDUNG**

(43) Veröffentlichungstag:
**10.12.2008 Patentblatt 2008/50**

(51) Int Cl.:
***G06F 11/10*** *(2006.01)*

(21) Anmeldenummer: 08103981.0

(22) Anmeldetag: **15.05.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(30) Priorität: **06.06.2007 DE 102007026406**

(71) Anmelder: **Continental Automotive GmbH
30165 Hannover (DE)**

(72) Erfinder:
 • **Braun, Michael
  81825 München (DE)**
 • **Meyer, Bernd Dr.
  81739 München (DE)**
 • **Schafheutle, Marcus
  81539 München (DE)**

(54) **Vorrichtung und Verfahren zum Codieren und Speichern eines Datenwortes**

(57) Die Erfindung schafft eine Vorrichtung und Verfahren zum Codieren und Speichern mindestens eines Datenwortes (DW), wobei für das aus Datensymbolen (d) bestehende Datenwort (DW) ein aus Codesymbolen (c) bestehendes Codewort (CW) berechnet wird, welches in ein abspeicherbares Codewort (CW') transformiert wird, wenn mindestens ein Codesymbol (c) des berechneten Codewortes (CW) nicht über einen Bus (4) mit einer vorgegebenen Busbreite (w) in einen Speicher (5) abspeicherbar ist.

FIG 1

EP 2 000 910 A2

**Beschreibung**

Die Erfindung betrifft eine Vorrichtung und ein Verfahren zum Codieren und Speichern mindestens eines Datenwortes und insbesondere zur optimierten Implementierung von Reed-Solomon-Error-Correcting-Codes auf einer Signalprozessorarchitektur.

Fehlerkorrekturverfahren ECC (Error Correction Coding) dienen dazu, Fehler bei der Speicherung und Übertragung von Daten zu erkennen und, wenn möglich, zu korrigieren. Es sind verschiedene fehlererkennende und -korrigierende Codes bekannt, wie beispielsweise der Bose-Ray-Chaudhuri-Code (BCH) oder der Reed-Solomon-Code (RS). BCH-Codes sind zyklische fehlerkorrigierende Codes, welche in der digitalen Signalverarbeitung und Datenspeicherung eingesetzt werden. Reed-Solomon-Codes sind spezielle BCH-Codes und werden beispielsweise zur Fehlerkorrektur auf Audio-CDs eingesetzt. Fehlerkorrigierende Codes auf Basis von BCH-Codes oder Reed-Solomon-Codes lassen sich mit Schieberegisterstrukturen in Hardware als Codes über endlichen Körpern der Form $GF(2^N)$ implementieren (GF: Galois Feld). Ein Galois-Feld GF ist ein Körper mit endlich vielen Elementen. Aufgrund der effizienten Implementierung in Hardware von BCH- bzw. Reed-Solomon-Codes werden diese vielfältig zum sicheren Speichern und Übertragen von Daten über Satelliten, Mobilfunk oder WLAN-Kommunikation eingesetzt.

Wenn allerdings solche fehlerkorrigierenden Codes in Software mit herkömmlichen Prozessoren implementiert werden, ist die erzielbare Performance wesentlich schlechter. Selbst bei hoch-optimierten Algorithmen besteht ein wesentlicher Nachteil darin, dass herkömmliche Standard-Prozessoren die von fehlerkorrigierenden Codes verwendete Arithmetik in Körpern der Form $GF(2^N)$ nicht unterstützen. Zur Programmierung einer Multiplikation in $GF(2^8)$ wird beispielsweise die Tatsache ausgenutzt, dass sich jedes Element aus $GF(2^8)$ außer der Null als Potenz eines primitiven Elements des Körpers darstellen lässt. Es werden zwei Tabellen definiert, nämlich die Logarithmus-Tabelle und eine Anti-Logarithmus-Tabelle (diskrete Exponentiation). Dabei bildet die Logarithmus-Tabelle ein Körperelement auf den entsprechenden Exponenten bezüglich des gewählten primitiven Elements des Körpers ab. Eine Anti-Logarithmus-Tabelle implementiert demgegenüber die Umkehrabbildung. Bei der herkömmlichen Vorgehensweise erfolgt eine Multiplikation in $GF(2^8)$ mittels dreier Tabellenzugriffe. Zunächst werden die (diskreten) Logarithmen beider Operanden gebildet und anschließend die Logarithmen mit herkömmlicher Arithmetik modulo der Ordnung der multiplikativen Untergruppe von $GF(2^N)$ addiert. Anschließend wird mittels der Tabelle der Umkehrabbildung das Produkt der ursprünglichen Operanden bestimmt. Die Berechnung auf Basis von Tabellen ist aufgrund der Beschränkung der Größe der notwendigen Tabellen für relativ kleine Erweiterungsgrade verwendbar. Bei anderen Implementierungen werden für Körpererweiterungen Polynomarithmetiken modulo eines irreduziblen Polynoms eingesetzt. Gebräuchlich sind dabei die polynomielle Basisdarstellung oder die Normalbasisdarstellung.

Herkömmliche Verfahren haben häufig den Nachteil, dass die vorhandene Busbandbreite des Datenbusses, die beispielsweise 8, 16 oder 32 Bit beträgt, nicht optimal ausgenutzt wird.

Es ist daher eine Aufgabe der vorliegenden Erfindung, ein Verfahren und eine Vorrichtung zum Codieren und Speichern von Datenworten zu schaffen, welche die vorhandene Busbandbreite eines zum Codieren eingesetzten Mikroprozessors optimal ausnutzt.

Diese Aufgabe wird erfindungsgemäß durch ein Verfahren mit den im Patentanspruch 1 angegebenen Merkmalen gelöst.

Die Erfindung schafft ein Verfahren zum Codieren und Speichern mindestens eines Datenwortes, wobei für das aus Datensymbolen (d) bestehende Datenwort (DW) ein aus Codesymbolen (c) bestehendes Codewort (CW) berechnet wird, welches in ein abspeicherbares Codewort (CW') transformiert wird, wenn mindestens ein Codesymbol (c) des berechneten Codewortes (CW) nicht über einen Bus mit einer vorgegebenen Busbreite (w) in einen Speicher abspeicherbar ist.

Bei einer Ausführungsform des erfindungsgemäßen Verfahrens wird das Datenwort (DW) durch die Berechnung einer aus Prüfsymbolen (r) bestehenden Prüfsumme (PS) mittels einer Codiervorschrift (CV) codiert.

Bei einer Ausführungsform des erfindungsgemäßen Verfahrens umfassen die Codesymbole (c) des berechneten Codewortes (CW) die Datensymbole (d) des Datenwortes (DW) und die Prüfsymbole (r) der Prüfsumme (PS).

Bei einer Ausführungsform des erfindungsgemäßen Verfahrens wird das Codewort (CW) mittels einer vorgegebenen Transformationsvorschrift (TV) in das transformierte Codewort (CW') transformiert, wenn mindestens ein Codesymbol (c) des berechneten Codewortes (CW) einen Wert größer als $2^w-1$ aufweist.

Bei einer Ausführungsform des erfindungsgemäßen Verfahrens werden zur Transformation des Codewortes (CW) diejenigen Codesymbole (c), deren Werte jeweils größer als $2^w-1$ sind, mittels der vorgegebenen Transformationsvorschrift (TV) auf Codesymbole (c') abgebildet, deren Werte jeweils kleiner oder gleich $2^w-1$ sind.

Bei einer Ausführungsform des erfindungsgemäßen Verfahren wird das transformierte Codewort (CW') in den Speicher abgespeichert.

Bei einer Ausführungsform des erfindungsgemäßen Verfahrens wird das berechnete Codewort (CW) untransformiert in den Speicher abgespeichert, wenn alle Codesymbole (c) des berechneten Codewortes (CW) einen Wert kleiner oder gleich $2^w-1$ aufweisen.

Bei einer Ausführungsform des erfindungsgemäßen Verfahrens wird das aus Datensymbolen (d) bestehende Datenwort (DW) durch ein Hilfsdatensymbol (e) erweitert.

Bei einer Ausführungsform des erfindungsgemäßen Verfahrens ist die Codiervorschrift (CV) eine Multiplikation des Datenwortes (DW) mit einer Codiermatrix (CM).

Bei einer Ausführungsform des erfindungsgemäßen Verfahrens wird das erweiterte Datenwort (DW, e) mit einer Codiermatrix (CM) zur Berechnung einer Prüfsumme (PS) multipliziert.

Bei einer Ausführungsform des erfindungsgemäßen Verfahrens weist das berechnete Codewort (CW) das erweiterte Datenwort (DW, e) und die Prüfsumme (PS) auf.

Bei einer Ausführungsform des erfindungsgemäßen Verfahrens wird, wenn mindestens ein Codesymbol (c) des berechneten Codewortes (CW) einen Wert größer als $2^w$-1 aufweist, das Hilfsdatensymbol (e) solange verändert und das durch das veränderte Hilfsdatensymbol (e') erweiterte Datenwort (DW, e') mit der Codiermatrix (CM) zur Berechnung eines transformierten Codewortes (CW') solange multipliziert, bis jedes Codesymbol (c') des transformierten Codewortes (CW') einen Wert kleiner oder gleich $2^w$-1 hat.

Bei einer Ausführungsform des erfindungsgemäßen Verfahrens wird der Wert des Hilfsdatensymbols (e) schrittweise inkrementiert.

Bei einer Ausführungsform des erfindungsgemäßen Verfahrens weisen alle Koeffizienten ($q_{ij}$) der Codiermatrix (CM) einen Wert kleiner als $2^w$ auf.

Bei einer Ausführungsform des erfindungsgemäßen Verfahrens erfolgt die Multiplikation des Datenwortes (DW) der Codiermatrix (CM) unter Verwendung einer Multiply-and-Accumulate-Einheit (MAC-Einheit).

Bei einer Ausführungsform des erfindungsgemäßen Verfahrens werden unter Verwendung der MAC-Einheit die Prüfsymbole (r) in Abhängigkeit von dem Koeffizienten ($q_{ij}$) der Codiermatrix (CM) und den Datensymbolen (d) des Datenwortes (DW) wie folgt berechnet:

$$r_i = \sum_j q_{ij} \cdot d_j \bmod p \, ,$$

wobei p ein Codeparameter ist.

Bei einer Ausführungsform des erfindungsgemäßen Verfahrens wird der Codeparameter (p) durch eine Primzahl mit $p > 2^w$ gebildet.

Bei einer Ausführungsform des erfindungsgemäßen Verfahrens wird das Codewort (c) aus dem Datenwort (DW) mittels eines Generatorpolynoms (g) berechnet.

Bei einer Ausführungsform des erfindungsgemäßen Verfahrens werden die Koeffizienten ($q_{ij}$) der Codiermatrix (CM) in Abhängigkeit von dem Generatorpolynom (g) berechnet.

Bei einer Ausführungsform des erfindungsgemäßen Verfahrens ist das Generatorpolynom (g) ein Generatorpolynom eines linearen fehlerkorrigierenden Codes.

Bei einer Ausführungsform des erfindungsgemäßen Verfahrens ist der lineare fehlerkorrigierende Code ein Reed-Solomon-Code.

Bei einer Ausführungsform des erfindungsgemäßen Verfahrens ist der lineare fehlerkorrigierende Code ein BCH-Code.

Die Erfindung schafft ferner eine Vorrichtung zum Codieren und Speichern mindestens eines Datenwortes (DW), wobei für das aus Datensymbolen (d) bestehende Datenwort (DW) ein aus Codesymbolen (c) bestehendes Codewort (CW) berechnet wird, welches in ein abspeicherbares Codewort (CW') transformiert wird, wenn mindestens ein Codesymbol (c) des berechneten Codewortes (CW) nicht über einen Bus mit einer vorgegebenen Busbreite (w) in einen Speicher abspeicherbar ist.

Bei einer Ausführungsform der erfindungsgemäßen Vorrichtung weist die Vorrichtung eine MAC-Einheit auf, so dass unter Verwendung der MAC-Einheit das Datenwort (DW) mit einer Codiermatrix (CM) zur Berechnung einer aus Prüfsymbolen (r) bestehenden Prüfsumme (PS) multipliziert wird.

Die erfindungsgemäße Vorrichtung wird beispielsweise in einem digitalen Tachographen eingesetzt.

Im Weiteren werden bevorzugte Ausführungsformen des erfindungsgemäßen Verfahrens und der erfindungsgemäßen Vorrichtung unter Bezugnahme auf die beigefügten Figuren zur Erläuterung erfindungswesentlicher Merkmale beschrieben.

Es zeigen:

Figur 1: ein Blockschaltbild einer möglichen Ausführungsform der erfindungsgemäßen Vorrichtung zum Codieren und Speichern eines Datenwortes;

Figur 2:  ein Blockschaltbild einer innerhalb einer erfindungsgemäßen Vorrichtung gemäß Figur 1 eingesetzten MAC-Einheit;

Figur 3:  ein Ablaufdiagramm einer möglichen Ausführungsform des erfindungsgemäßen Verfahrens zum Codieren und Speichern mindestens eines Datenwortes;

Figur 4:  ein Ablaufdiagramm einer weiteren Ausführungsform des erfindungsgemäßen Verfahrens zum Codieren und Speichern eines Datenwortes.

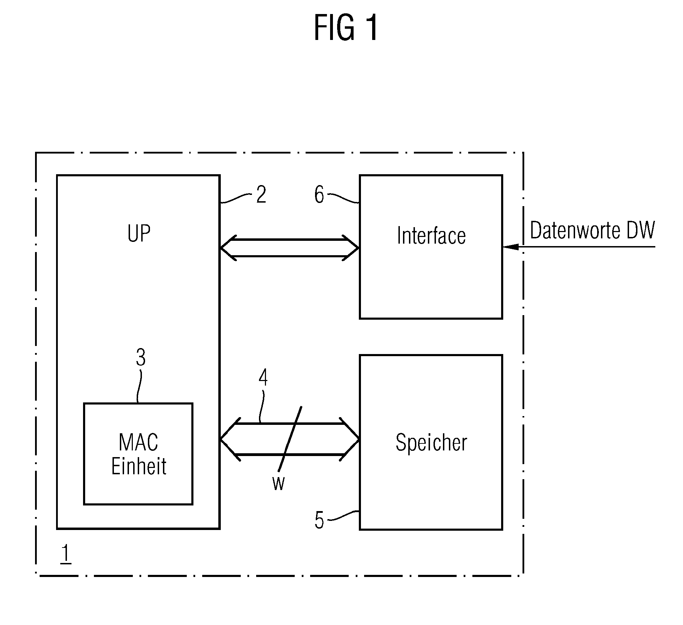

Wie man aus Figur 1 erkennen kann, weist die erfindungsgemäße Vorrichtung 1 zum Codieren und Speichern eines Datenwortes DW mindestens einen Mikroprozessor bzw. eine Berechnungseinheit 2 auf, die vorzugsweise eine MAC-Einheit 3 enthält. Der Mikroprozessor 2 ist über einen Bus 4 mit einem Speicher 5 verbunden. Der Bus 4 weist eine vorgegebene Busbreite w auf. Beispielsweise über ein Interface 6 erhält der Mikroprozessor 2 mindestens ein Datenwort DW. Das Datenwort DW besteht dabei aus Datensymbolen d, die ihrerseits aus mehreren Datenbits bestehen. Der Mikroprozessor 2 berechnet für das aus den Datensymbolen d bestehende Datenwort DW mittels einer vorgegebenen Codiervorschrift CV ein aus Codesymbolen c bestehendes Codewort CW. Wenn mindestens ein Codesymbol c des berechneten Codewortes CW nicht über den Bus 4 mit der vorgegebenen Busbreite w in eine einzelne Zelle der Breite w des Speichers 5 abspeicherbar ist, wird das Codewort CW durch den Mikroprozessor 2 mit einer vorgegebenen Transformationsvorschrift TV in ein abspeicherbares Codewort CW' transformiert. Das abspeicherbare Codewort CW' wird anschließend in dem Speicher 5 abgelegt.

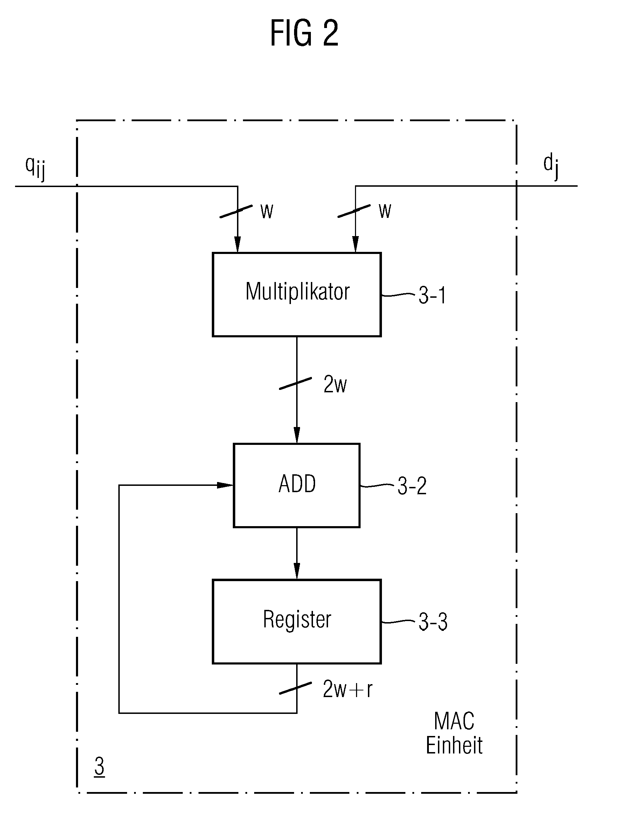

Figur 2 zeigt ein Blockschaltbild einer möglichen Ausführungsform einer MAC-Einheit 3 innerhalb des Mikroprozessors 2. Die Codierung des Datenwortes DW zur Berechnung einer aus Prüfsymbolen r bestehenden Prüfsumme PS erfolgt mittels einer Codiervorschrift CV, wobei diese Codiervorschrift CV bei einer möglichen Ausführungsform durch eine Multiplikation eines Datenwortes DW mit einer vorgegebenen Codiermatrix CM gebildet wird. Diese Multiplikation des Datenwortes mit einer Codiermatrix CM erfolgt bei einer möglichen Ausführungsform mittels einer in Figur 2 dargestellten MAC-Einheit 3 des Mikroprozessors 2. Unter Verwendung der MAC-Einheit 3 werden die Prüfsymbole r in Abhängigkeit von den Koeffizienten $q_{ij}$ der Codiermatrix CM mit den Datensymbolen d des Datenwortes DW wie folgt berechnet:

$$ r_i = \sum_j q_{ij} \cdot d_j \bmod p \, , $$

wobei p ein Codeparameter darstellt.

Die in Figur 2 dargestellte MAC-Einheit 3 enthält einen Multiplikator 3-1 zur Multiplikation der beiden Operanden, eine Addiereinheit 3-2 und ein auslesbares Register bzw. Akkumulator 3-3. Mit der Multiply-and-Accumulate-Einheit 3 werden beispielsweise in einem Taktzyklus zwei Operanden, d. h. die Koeffizienten $q_{ij}$ der Codiermatrix CM und ein Datensymbol $d_j$ des Datenwortes DW miteinander multipliziert und zu einem Akkumulatorinhalt hinzuaddiert. Das Register bzw. der Akkumulator 3-3 ist typischerweise einige Bit breiter als das Doppelte der Busbandbreite w, um etwaige Überträge bei der Addition auffangen zu können. Anschließend erfolgt eine Modulo-p-Operation, d. h. eine Division durch p, wobei der Rest das Ergebnis darstellt. Dieser Codeparameter p wird bei einer möglichen Ausführungsform der erfindungsgemäßen Vorrichtung 1 durch eine Primzahl $p > 2^w$ gebildet.

Der in Figur 1 dargestellte Mikroprozessor 2 multipliziert unter Verwendung der MAC-Einheit 3, wie sie in Figur 2 dargestellt ist, das Datenwort DW, welches der Mikroprozessor 2 beispielsweise über das Interface 6 erhält, mit einer vorgegebenen Codiermatrix CM. Anschließend überprüft der Mikroprozessor 2, ob das berechnete aus Codesymbolen c bestehende Codewort CW über den Bus 4 in dem Speicher 5 abspeicherbar ist. Wenn mindestens ein Codesymbol c des berechneten Codewortes CW nicht über den Bus 4 mit der vorgegebenen Busbreite w in eine einzelne Zelle der Breite w des Speichers 5 abspeicherbar ist, wird das Codewort CW mit einer vorgegebenen Transformationsvorschrift TV in ein abspeicherbares Codewort CW' transformiert. Die Transformation erfolgt zumindest für jedes Codesymbol c des berechneten Codewortes CW, das einen Wert größer als $2^w-1$ aufweist. Dabei werden vorzugsweise diejenigen Codesymbole c, deren Werte jeweils größer als $2^w-1$ sind, mittels der vorhergehenden Transformationsvorschrift TV auf Codesymbole c' abgebildet, deren Werte jeweils kleiner oder gleich $2^w-1$ sind. Wenn umgekehrt alle Codesymbole c des berechneten Codewortes CW bereits einen Wert kleiner oder gleich $2^w-1$ aufweisen und somit abspeicherbar sind, kann das berechnete Codewort CW in dem Speicher 5 untransformiert abgespeichert werden.

Bei einer möglichen Ausführungsform der erfindungsgemäßen Vorrichtung 1 sind die Koeffizienten der Codiermatrix CM ebenfalls in dem Speicher 5 abgespeichert. Dabei weisen die Koeffizienten $q_{ij}$ der Codiermatrix CM vorzugsweise einen Wert kleiner als $2^w$ auf.

Bei einer möglichen Ausführungsform der erfindungsgemäßen Vorrichtung 1 werden die Koeffizienten $q_{ij}$ der Codiermatrix CM in Abhängigkeit von einem Generatorpolynom g berechnet. Bei diesem Generatorpolynom handelt es sich vorzugsweise um ein Generatorpolynom eines linearen fehlerkorrigierenden Codes, beispielsweise des Reed-Solomon-Codes oder eines BCH-Codes.

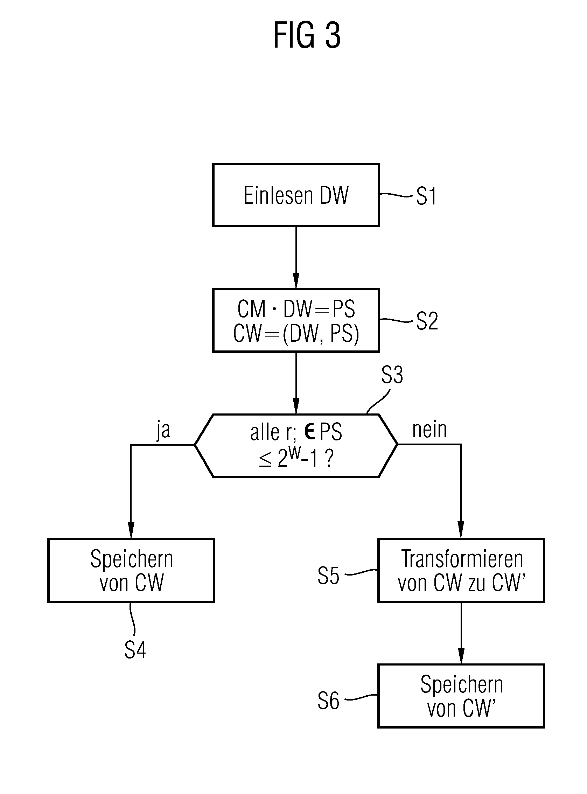

Figur 3 zeigt ein Ablaufdiagramm zur Darstellung einer möglichen Ausführungsform des erfindungsgemäßen Verfahrens zum Codieren und Speichern von Datenworten DW.

In einem ersten Schritt S1 wird beispielsweise über das Interface 6 mindestens ein Datenwort DW eingelesen.

In einem weiteren Schritt S2 wird das Datenwort DW mit einer Codiermatrix CM zur Berechnung einer Prüfsumme PS multipliziert. Das auf diese Weise gebildete Codewort CW umfasst das ursprüngliche Datenwort DW und die berechnete Prüfsumme PS.

$$CM \cdot DW = PS$$

$$\begin{bmatrix} q_{K-1,n-k-1} & q_{k-2,n-k-1} \cdots & q_{0,n-k-1} \\ q_{k-1,n-k-2} & q_{k-2,n-k-2} \cdots & q_{0,n-k-2} \\ \vdots & & \\ q_{k-1,0} & q_{k-2,0} & \cdots & q_{0,0} \end{bmatrix} \cdot \begin{pmatrix} d_{k-1} \\ d_{k-2} \\ \vdots \\ d_0 \end{pmatrix} = \begin{pmatrix} r_{n-k} \\ \vdots \\ r_0 \end{pmatrix}$$

Die Koeffizienten q der Codiermatrix CM hängen von dem Generatorpolynom g(x) ab. Die Koeffizienten sind bei einer möglichen Ausführungsform in dem Speicher 5 abspeicherbar und weisen einen Wert kleiner $2^w$ auf.

Das Ergebnis des Matrixprodukts ist die gesuchte Prüfsumme PS mit den Prüfsymbolen r. Im Schritt S3 überprüft der Mikroprozessor 2, ob alle Prüfsymbole r der Prüfsumme PS kleiner oder gleich $2^w$-1 sind. Ist dies der Fall, wird das berechnete Codewort CW, welches das Datenwort DW und die berechnete Prüfsumme PS umfasst, im Schritt S4 im Speicher 5 abgespeichert. Wird umgekehrt festgestellt, dass nicht alle Prüfsymbole r der Prüfsumme PS kleiner oder gleich $2^w$-1 sind, erfolgt eine Transformation des berechneten Codeworts CW im Schritt S5. Diese Transformation erfolgt mit einer vorgegebenen Transformationsvorschrift TV. Das berechnete Codewort CW enthält Codesymbole c, die einerseits die Datensymbole d des ursprünglichen Datenwortes DW und andererseits die berechneten Prüfsymbole r der Prüfsumme PS umfassen. Bei der Transformation des Codewortes CW werden alle diejenigen Codeworte c, deren Werte größer als $2^w$-1 sind, durch die vorgegebene Transformationsvorschrift TV auf Codesymbole c' abgebildet, deren Werte jeweils kleiner oder gleich als $2^w$-1 sind.

Bei einer möglichen Ausführungsform der Transformationsvorschrift TV werden Prüfsymbole r mit $r_i > 2^w$-1 ignoriert und durch einen beliebigen Wert aus GF(p) ersetzt. Bei dieser Ausführungsform wird bei der Überprüfung des Codewortes CW zwar ein Fehler detektiert, allerdings führt die Rekonstruktion des codierten Datenwortes DW zu einem korrekten Ergebnis bei geeigneter Wahl der Codeparameter. Die bei dieser Vorgehensweise bewusst in Kauf genommenen Fehler in dem abgespeicherten Codewort führen dazu, dass beim Detektieren von Fehlern nur einzelne Syndrome falsch sind. Fehler in den Codesymbolen, welche zu Nachrichten bzw. Datenwörtern DW gehören, führen im Allgemeinen dazu, dass alle Syndrome des gespeicherten Codewortes falsch sind. Hierdurch können bei dem erfindungsgemäßen Verfahren die durch unterdrückte Expansion von Codesymbolen c > $2^w$-1 verursachten Fehler leicht erkannt werden.

In einem Schritt S6 wird das transformierte Codewort CW' im Speicher 5 über den Bus 4 abgespeichert. Die eingesetzte Transformationsvorschrift TV kann eine beliebige Transformationsvorschrift sein, welche dazu führt, dass die Codesymbole c' des transformierten Codewortes CW einen Wert aufweisen, der jeweils kleiner als $2^w$-1 ist.

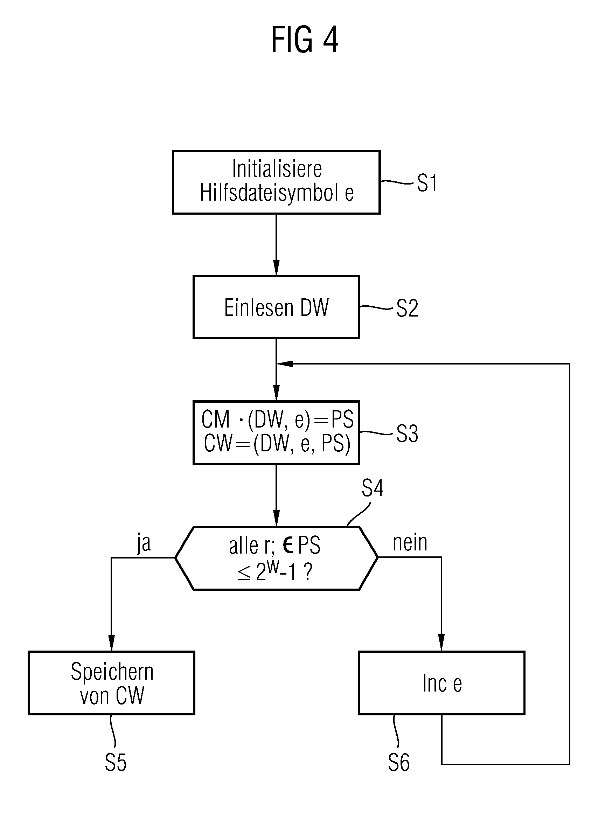

Figur 4 zeigt ein Ablaufdiagramm einer weiteren Ausführungsform des erfindungsgemäßen Verfahrens zum Codieren und Speichern mindestens eines Datenwortes DW.

In einem Schritt S1 wird bei dieser zweiten Ausführungsform ein Hilfsdatensymbol e initialisiert. Dabei gilt $0 \leq e < 2^w$. Bei einer praktischen Implementierung kann das Hilfsdatensymbol auf einen Wert e = 0 initialisiert werden.

Im nächsten Schritt S2 wird das Datenwort DW beispielsweise über das Interface 6 in den Mikroprozessor 2 eingelesen. Das zu codierende Datenwort DW wird um das Hilfsdatensymbol e erweitert. Auf diese Weise besitzt das neue zu codierende Datenwort DW einen weiteren Freiheitsgrad.

In einem weiteren Schritt S3 wird das erweiterte Datenwort, welches die Datensymbole d und das Hilfsdatensymbol e umfasst, mit der vorgegebenen Codiermatrix CM zur Berechnung der Prüfsumme PS multipliziert. Das auf diese Weise gebildete Codewort CW umfasst ein Datenwort DW, das Hilfsdatensymbol e sowie die berechnete Prüfsumme PS. Die Prüfsumme PS besteht aus den berechneten Prüfsymbolen r.

In einem weiteren Schritt S4 prüft der Mikroprozessor 2, ob alle berechneten Prüfsymbole einen Wert $\leq 2^w-1$ aufweisen.

Ist dies der Fall, wird das berechnete Codewort CW im Schritt S5 in dem Speicher 5 abgelegt. Falls nicht alle berechneten Prüfsymbole r einen Wert $\leq 2^w-1$ aufweisen, werden sie in einem Schritt S6 geändert, indem das Hilfsdatensymbol e inkrementiert wird. Anschließend kehrt der Vorgang zu Schritt S3 zurück. Wie man aus Figur 4 erkennen kann, wird das Hilfsdatensymbol e geändert, wenn mindestens ein Codesymbol c des berechneten Codewortes CW, d. h. ein Prüfsymbol r, einen Wert größer als $2^w-1$ aufweist. Die Veränderung des Hilfsdatensymbols e erfolgt beispielsweise durch Inkrementierung des Wertes des Hilfsdatensymbols. Das durch das veränderte Hilfsdatensymbol e' erweiterte Datenwort (DW, e') wird anschließend seinerseits mit der Codiermatrix CM zur Berechnung eines transformierten Codewortes CW' multipliziert. Die Veränderungen des Hilfsdatensymbols und die Multiplikation des um das veränderte Hilfsdatensymbol e' erweiterten Datenwortes DW mit der Codiermatrix CM erfolgen so lange, bis jedes Codesymbol c' des transformierten Codewortes CW' einen Wert kleiner oder gleich $2^w-1$ aufweist.

Bei dem erfindungsgemäßen Verfahren wird die Busbandbreite w des Datenbusses 4 optimal ausgenutzt. Darüber hinaus wird vorzugsweise die in dem Mikroprozessor 2 vorhandene MAC-Einheit 3 zur beschleunigten Berechnung und Prüfung von Codewörtern CW verwendet.

Durch das erfindungsgemäße Verfahren wird die Expansion von Codewörtern CW, durch einfache Umcodierung, welche effizient implementiert werden kann oder unter Inkaufnahme einer geringeren fehlerkorrigierenden Eigenschaft vollständig verhindert.

Zur Berechnung wird vorzugsweise ein Körper GF(p) eingesetzt, mit einer Primzahl $p > 2^w$, welche eine effiziente modulare Reduktion in Software ermöglicht. Beispielsweise erfolgt die Berechnung in einem Körper GF(p) mit einer Mersenne- oder Pseudo-Mersenne-Primzahl p, wobei wegen $p \geq 2^w$ sich alle mit der Busbreite w darstellbaren Bitmuster des Mikrocontrollers 2 in den endlichen Körper GF(p) einbetten lassen.

Obwohl sich die nachfolgenden Optimierungsmaßnahmen auch für allgemeine lineare Codes implementieren lassen, werden sie am Beispiel eines (verkürzten) Reed-Solomon Codes (RS) ausgeführt. Die Reed-Solomon Codes RS haben zusammen mit BCH-Codes eine hohe praktische Bedeutung. Die erfindungsgemäßen Optimierungsmaßnahmen sind aber unabhängig von den verwendeten Verfahren zur Fehlerkorrektur und können auch auf verallgemeinerte Codes angewendet werden.

Das Generatorpolynom $g(x) = \Pi_{0 \leq i < n-k} (x - a_i)$ ist ein Generatorpolynom vom Grad n - k eines Reed-Solomon Codes RS mit den Nullstellen $a_i$ aus GF(p) für $0 \leq i < n - k$.

Zur Konstruktion eines (verkürzten) Reed-Solomon Codes RS wählt man als Nullstellen $a_i$ aufeinanderfolgende Potenzen eines primitiven Elements des Körpers GF(p).

Um zu einem Datenwort DW bestehend aus einer Folge von Datensymbolen $(d_{k-1}, ..., d_0)$ der Länge k mit $0 \leq d_i < 2^w$ für $0 \leq i < k$ das zugehörige Codewort CW des Codes zu berechnen, wird (bei einer systematischen Codierung) die Folge der Codewörter CW als ein Polynom

$$p(x) = \sum_{0 \leq i < k} d_i \, x^{i+n-k}$$

interpretiert und ein Polynom r(x)

$$r(x) = - p(x) \bmod g(x)$$

vom Grad höchstens n - k - 1 im Polynomring GF(p)[x] berechnet.

$$r(x) = \sum_{0 \leq i < n-k} r_i \, x^i,$$

wobei r(x) der Rest der Polynomdivision - p(x) / g(x) ist. Das resultierende Codewort CW besteht aus einer Folge $(d_{k-1}, ..., d_0, r_{n-k-1}, ..., r_0)$ und hat die Länge n. Es folgt direkt aus der Konstruktionsweise des Codewortes CW, dass bei einer Interpretation des Codewortes CW als Polynom c(x) vom Grad n mit $c(x) = \sum_{0 \leq i < k} d_i \, x^{i+n-k} + \sum_{0 \leq i < n-k} r_i \, x^i$ folgende Bedingung erfüllt ist:

$$c(x) = p(x) + r(x) \equiv 0 \bmod g(x).$$

Bei Hardware-Implementierungen wird die Berechnung des Restes $r(x)$ bei der Polynomdivision - $p(x) / g(x)$ üblicherweise durch eine Schieberegisteranordnung durchgeführt. Damit dieser Berechnungsschritt der Codierung auf der MAC-Einheit 3 des Signalprozessors 2 effizient implementiert werden kann, führt man die Berechnung des Polynoms $r(x)$ erfindungsgemäß auf ein Matrixprodukt zurück:

Als reduzierte Reste der Polynomdivision - $x^{v + n - k} / g(x)$, d. h. $z_v(x) = - x^{v + n - k} \bmod g(x)$, ergeben sich die Polynome $Z_v(x) = \Sigma \, 0 \le i < n - k \; q_{v, i} \, x^i$ für $0 \le v < k$. Die Koeffizienten $q_{v, i}$ hängen dabei nur von der konkreten Wahl des Generatorpolynoms $g(x)$ ab. Sie sind daher konstant und können vorberechnet werden.

Bei der Implementierung des Verfahrens werden die Nullstellen $a_i$ aus $GF(p)$ für $0 \le i < n - k$ des Generatorpolynoms $g(x)$ derart gewählt, dass alle vorberechneten Koeffizienten $q_{v, i}$ für $0 \le v < k$ und $0 \le i < n - k$ der Polynome $z_v(x)$ die Bedingung $0 \le q_{v, i} < 2^w$ erfüllen. Bei dieser Wahl des Generatorpolynoms $g(x)$ tritt bei der Berechnung der Koeffizienten $q_{v, i}$ keine Expansion auf Werte $> 2^w - 1$ auf und alle Koeffizienten $q_{v, i}$ können in einer einzelnen Speicherzelle der Breite $w$ im Speicher gehalten werden.

Das für die Codierung eines Datenworts DW bestehend aus einer Folge von Datensymbolen $(d_{k-1}, ..., d_0)$ notwendige Polynom $r(x)$ kann nun durch folgendes Matrixprodukt berechnet werden:

$$
\begin{pmatrix}
q_{k-1,n-k-1} & q_{k-2,n-k-1} & \cdot & \cdot & \cdot & q_{0,n-k-1} \\
q_{k-1,n-k-2} & q_{k-2,n-k-2} & \cdot & \cdot & \cdot & q_{0,n-k-2} \\
\cdot & \cdot & & \cdot & & \cdot \\
\cdot & \cdot & & \cdot & & \cdot \\
\cdot & \cdot & & & \cdot & \cdot \\
q_{k-1,0} & q_{k-2,0} & \cdot & \cdot & \cdot & q_{0,0}
\end{pmatrix}
\cdot
\begin{pmatrix}
d_{k-1} \\
d_{k-2} \\
\cdot \\
\cdot \\
\cdot \\
d_0
\end{pmatrix}
=
\begin{pmatrix}
r_{n-k-1} \\
r_{n-k-2} \\
\cdot \\
\cdot \\
\cdot \\
r_0
\end{pmatrix}
$$

Unter obigen Annahmen an den verwendeten Microcontroller kann dieses Matrixprodukt und damit die Codierung der Folge von Datensymbolen $(d_{k-1}, ..., d_0)$ unter Verwendung der MAC-Einheit effizient berechnet werden.

Um zu testen, ob die Folge $(d_{k-1}, ..., d_0, r_{n-k-1}, ..., r_0)$ ein korrektes Codewort darstellt, ist es möglich, die Codierung der Folge $(d_{k-1}, ..., d_0)$ erneut zu berechnen und das Ergebnis mit den abgespeicherten Werten des Codewortes zu vergleichen. Falls die Kodierung sehr schnell durchgeführt werden kann und das Auftreten von Fehlern selten ist, kann eine solche Vorgehensweise sinnvoll sein. Bei einer systematischen Codierung ist diese Vorgehensweise durch die spezielle Form der Codiermatrix sogar schneller als die Berechnung der Syndrome über den Nullstellen des Generatorpolynoms.

Um die vorhandenen Fehler korrigieren zu können, werden als erster Schritt der Prüfung und Decodierung die sogenannten Syndrome (über den Nullstellen des Generatorpolynoms) berechnet. Für Reed-Solomon Codes RS besteht die Berechnung der Syndrome darin, dass die Folge $(d_{k-1}, ..., d_0, r_{n-k-1}, ..., r_0)$ als ein Polynom $s(x) = \Sigma_{0 \le i < k} d_i \, x^{i + n - k} + \Sigma_{0 \le i < n - k} r_i \, x^i$ interpretiert und an den Nullstellen $a_i$ aus $GF(p)$ für $0 \le i < n - k$ des Generatorpolynoms $g(x)$ ausgewertet wird. Die resultierende Folge $(s_{n-k-1}, ..., s_0)$ mit $s_i = s(a_i)$ für $0 \le i < n - k$ wird als Folge der Syndrome bezeichnet.

Es ergibt sich direkt aus der Konstruktion der Codewörter, dass, falls die Folge $(d_{k-1}, ..., d_0, r_{n-k-1}, ..., r_0)$ ein fehlerfreies Codewort des Codes ist,

$$s_i = s(a_i) = p(a_i) + r(a_i) = 0$$

für alle Nullstellen $a_i$ aus $GF(p)$ für $0 \le i < n - k$ gilt, wobei $p(x) = \Sigma_{0 \le i < k} d_i \, x^{i + n - k}$ und $r(x) = - p(x) \bmod g(x)$ ist.

Falls die Folge $(d_{k-1}, ..., d_0, r_{n-k-1}, ..., r_0)$ kein gültiges Codewort ist, gibt es Werte $S_j = s(a_j) \neq 0$ .

Mit Hilfe der Folge der Syndrome $(s_{n-k-1}, ..., s_0)$ ist es dann möglich (falls es nicht zu viele Fehler sind), die fehlerhaften Stellen der Folge von Datensymbolen $(d_{k-1}, ..., d_0)$ zu erkennen und gegebenenfalls zu korrigieren.

Der Schritt der Berechnung der Syndrome $(s_{n-k-1}, ..., s_0)$, das heißt, die Auswertung des Polynoms s(x) an den Nullstellen $a_i$ des Generatorpolynoms, kann auf ein Matrixprodukt mit einer vorberechneten Matrix zurückgeführt werden und ist daher auf der MAC-Einheit 3 des Prozessors 2 effizient implementierbar:

$$
\begin{pmatrix}
a_0^{\,n} & a_0^{\,n-1} & \cdot & \cdot & \cdot & a_0^{\,0} \\
a_1^{\,n} & a_1^{\,n-1} & \cdot & \cdot & \cdot & a_1^{\,0} \\
\cdot & \cdot & \cdot & & & \cdot \\
\cdot & \cdot & & \cdot & & \cdot \\
\cdot & \cdot & & & \cdot\ .\ 15 & \\
a_{n-k-1}^{\,n} & a_{n-k-1}^{\,n-1} & \cdot & \cdot & \cdot & a_{n-k-1}^{\,0}
\end{pmatrix}
\cdot
\begin{pmatrix}
d_{k-1} \\ \cdot \\ \cdot \\ \cdot \\ d_0 \\ r_{n-k-1} \\ \cdot \\ \cdot \\ \cdot \\ r_0
\end{pmatrix}
=
\begin{pmatrix}
s_0 \\ \cdot \\ \cdot \\ \cdot \\ \\ S_{n-k-1}
\end{pmatrix}
$$

Das Ergebnis der Berechnung des Matrixproduktes ist der gesuchte Spaltenvektor $(s_{n-k-1}, ..., s_0)$. Das Matrixprodukt und damit die Kodierung der Folge der Syndrome $(s_{n-k-1}, ..., s_0)$ kann unter Verwendung der MAC-Einheit 3 effizient berechnet werden.

Die Inhalte der Matrix sind Potenzen der Nullstellen $a_i$ des Generatorpolynoms g(x). Sie hängen nur von der Wahl des konkreten Generatorpolynoms ab und sind daher konstant und können vorberechnet werden.

Bei dem Verfahren werden die Nullstellen $a_i$ aus GF(p) für $0 \leq i < n - k$ des Generatorpolynoms g(x) derart gewählt, dass alle vorberechneten Potenzen $a_i^{\,j}$ für $0 \leq i < n - k$ und $0 \leq j < n$ die Bedingung $0 \leq a_i^{\,j} < 2^w$ erfüllen. Mit dieser Wahl des Generatorpolynoms g(x) tritt bei der Berechnung der Potenzen $a_i^{\,j}$ keine Expansion durch Werte $> 2^w - 1$ auf und alle Potenzen $a_i^{\,j}$ können jeweils in einer einzelnen Speicherzelle des Speichers der Breite w gehalten werden.

Es ist nicht ausgeschlossen (und muss auch nicht verhindert werden), dass einige der berechneten Syndrome $(s_{n-k-1}, ..., s_0)$ Werte $> 2^w - 1$ aufweisen.

Der fehlererkennende und -korrigierende Code wird derart angepasst, dass die ganze Bus-Bandbreite w zur Berechnung und Prüfung von Codewörtern ausgenutzt werden kann. Dazu wird der ECC über einem endlichen Körper der Form GF(p) realisiert und die Datenwörter des Prozessors werden in den endlichen Körper eingebettet.

Bei einer Ausführungsform des erfindungsgemäßen Verfahrens wird die Berechnung und Prüfung der Codewörter auf Matrixmultiplikationen mit Elementen aus GF(p) reduziert, damit solche Berechnungen auf der Zielhardware effizient ausgeführt werden können. Insbesondere kann auf diese Weise die MAC-Einheit 3 des Signalprozessors 2 zur Beschleunigung der Berechnung verwendet werden.

Um bei den vorberechneten Tabellen zur Berechnung und Überprüfung der Codewörter und der Berechnung der Syndrome von Codewörtern eine Datenexpansion zu verhindern, werden die Nullstellen $a_i$ des Generatorpolynoms g(x) vorzugsweise derart gewählt, dass alle vorberechneten Tabelleneinträge Werte $< 2^w$ sind und daher in einem einzelnen Wort in einem Speicher abgelegt werden können.

Wenn das Codewort sehr schnell berechnet werden kann und Fehler äußerst selten auftreten, kann auf eine Tabelle zur schnellen Berechnung von Syndromen über den Nullstellen des Generatorpolynoms verzichtet werden und die Codewörter können mit Hilfe der sowieso vorhandenen Codiermatrix überprüft werden. Bei einer systematischen Codierung ist diese Vorgehendweise durch die spezielle Form der Codiermatrix sogar schneller als die Berechnung der Syndrome über den Nullstellen des Generatorpolynoms. Bei dieser Vorgehensweise ist allerdings bei einer tatsächlichen Korrektur von Fehlern in einem Codewort ein Mehraufwand notwendig.

Eine Datenexpansion bei den Koeffizienten $r_i > 2^w - 1$ des Polynoms r(x), welche bei der Kodierung berechnet werden, wird bei einer Ausführungsform ignoriert, wodurch mit einer von den Systemparametern abhängigen Wahrscheinlichkeit korrekte Codewörter zwar als falsch interpretiert jedoch von der Fehlerkorrektur korrekt rekonstruiert werden. Bei geeigneter Wahl der Systemparameter und Verteilung der Datensymbole kann dieser Mehraufwand an Rechenzeit vernachlässigt werden. Der Wert eines transformierten codierten Datenworts wird so gewählt, dass alle

Koeffizienten $r_i' < 2^w$ sind.

Bei einer weiteren Ausführungsform wird die zu codierende Folge von Datensymbolen $(d_{k-1}, ..., d_0)$ zu einer neuen Folge von Datensymbolen $(d_{k-1}, ..., d_0, e)$ erweitert, wobei $0 \leq e < 2^w$ gilt. Auf diese Weise besitzt die neue, zu kodierende Folge von Datensymbolen einen weiteren Freiheitsgrad und wir wählen den Wert des Datensymbols e so, dass die Koeffizienten des resultierenden Polynoms $r_e(x)$ sämtlich Koeffizienten kleiner $2^w$ sind und damit in der Wortbreite w des Prozessors durch ein einzelnes Codesymbol dargestellt werden können. Das neue Datensymbol e wird Bestandteil des Codewortes DW und zusammen mit diesem abgespeichert.

Eine praktische Implementierung des Verfahrens kann beispielsweise mit dem Wert e = 0 beginnen und, falls beim Berechnen des Polynoms $r_e(x)$ eine Datenexpansion durch mindestens einen Koeffizienten festgestellt wird, den Wert e um eins erhöhen und das Polynom $r_e(x)$ erneut berechnen. Diese Iteration wird solange durchgeführt, bis man ein Codewort ohne Datenexpansion erhält.

Damit diese Lösungsvariante funktioniert, ist es wesentlich, dass die dem Datensymbol e zugeordnete Spalte m der vorberechneten Matrix, d. h., die Koeffizienten von $- x_{n-k+m} \bmod g(x)$, sämtlich von 0 verschieden sind. Ein wesentlicher Schritt der erfindungsgemäßen Implementierung des Verfahrens besteht darin, die Nullstellen $a_i$ aus GF(p) für $1 \leq i \leq n - k$ des Generatorpolynoms g(x) so zu wählen, dass alle vorberechneten Koeffizienten dieser Spalte m von 0 verschieden sind.

Durch die Erweiterung der Folge von Datensymbolen um das Datensymbol e tritt zwar nicht mehr der Fall auf, dass unnötigerweise korrekte Codewörter korrigiert werden, allerdings sinkt die fehlerkorrigierende Eigenschaft des Codes. Zur vollständigen Kompensation muss der Grad n - k des Generatorpolynoms (mindestens) um 2 erhöht werden.

In einer weiteren Implementierungsvariante wird das Datensymbol e deutlich kleiner gewählt, als die übrigen Datensymbole $d_i$. Diese Variante ist möglich, weil für eine gegebene, zu kodierende Folge von Datensymbolen $(d_{k-1}, ..., d_0)$ nur wenige Werte für das zusätzliche Datensymbol e existieren, so dass die Koeffizienten der resultierenden Polynome $r_e(x)$ Koeffizienten größer $2^{w-1}$ enthalten. Die notwendige Größe für das Datensymbol e hängt von der Wahl der Primzahl p und dem Grad n - k des Generatorpolynoms g(x) ab.

Insgesamt lässt sich bei dem erfindungsgemäßen Verfahren die Rechenzeit zur Berechnung und Prüfung von Codewörtern drastisch reduzieren.

Bei einem Ausführungsbeispiel wird die Primzahl $p = 2^{16} + 1 = 65537$ zur Definition des Körpers GF(p) gewählt. Für diese Primzahl p tritt nur beim Element $2^{16}$ eine Datenexpansion auf. Die Zahl 3 ist ein primitives Element des Körpers. Es wird ein Code implementiert, der 16 Fehler in Datenwörtern DW bestehend aus einer Folge von 128 Datensymbolen korrigieren kann. Als Nullstellen des Generatorpolynoms werden $a_i = 3^i \bmod p$ für $1 \leq i \leq 32$ gewählt.

Auf diese Weise erhält man einen verkürzten Reed-Solomon Code RS, wobei das resultierende Generatorpolynom g(x) lautet:

```
g(x) = x^32 + 38272*x^31 + 59981*x^30 + 32340*x^29 +
8211*x^28 + 13030*x^27 + 46699*x^26 + 6247*x^25 + 65530*x^24
+ 48674*x^23 + 3252*x^22 + 32086*x^21 + 25535*x^20 +
21367*x^19 + 44597*x^18 + 56195*x^17 + 5532*x^16 + 37352*x^15
+ 23929*x^14+ 12356*x^13 + 50020*x^12 + 14553*x^11 +
40526*x^10 + 5481*x^9 + 24912*x^8 + 44319*x^7 + 30738*x^6 +
14054*x^5 + 53068*x^4 + 7442*x^3 + 43036*x^2 + 47805*x +
38223
```

Die Matrix zur Berechnung von Codewörtern (ohne Erweiterung um ein neues Datensymbol e) beginnt mit den Einträgen:

```
unsigned long enc[32][128] = {
27314, 19279,  8087, 25179,  6868, 16440, 48216, 12282, 60240,
17923, 23507, 62243, 13149, 45221, 19253, 20044, 55919,
 4640, 34525, 63891, 39580,  9823, 56915, 21542, 48096, 16995,
54299, 54274, 19254, 62823, 20630, 20748,
........................................}; 
```

Die Matrix mit den Potenzen der Nullstellen $a_i$ des Generatorpolynoms g(x) beginnt mit den Einträgen:

```
unsigned long root_table[32][128+32] = {

1,  3,  9,  27,  81,  243,  729,  2187,  6561,  19683,  59049,  46073,
 7145, 21435, 64305, 61841, 54449, 32273, 31282, 28309, 19390,
58170, 43436, 64771, 63239, 58643, 44855,  3491, 10473, 31419,
28720, 20623, 61869, 54533, 32525, 32038, 30577, 26194,
13045, 39135, 51868, 24530,  8053, 24159,  6940, 20820,
62460, 56306, 37844, 47995, 12911, 38733, 50662, 20912,
62736, 57134, 40328, 55447, 35267, 40264, 55255, 34691,
38536, 50071, 19139, 57417, 41177, 57994, 42908, 63187,
58487, 44387,  2087,  6261, 18783, 56349, 37973, 48382,
14072, 42216,
........................................}; 
```

Entsprechende Tabellen für einen Code mit 128 Datensymbolen und einem zusätzlichen neuen Datensymbol e zur Vermeidung der Datenexpansion lassen sich auf analoge Weise berechnen.

Sämtliche Einträge aller vorberechneten Tabellen weisen Werte kleiner als $2^{16}$ auf und sind von 0 verschieden. Sie können daher jeweils in einer einzelnen Speicherzelle des Speichers der Breite w gehalten werden. Es tritt folglich keine Datenexpansion bei den vorberechneten Tabellen auf.

Die erfindungsgemäße Vorrichtung sowie das erfindungsgemäße Verfahren eignen sich beispielsweise zur Sicherung von Speicherinhalten in Tachographenapplikationen bzw. Fahrtenschreibern. Im Gegensatz zu üblichen Anwendungsfällen für fehlerkorrigierende Codes, bei denen Fehler in Nachrichten korrigiert werden, die über einen verrauschten Kommunikationskanal übertragen werden, kann bei Tachographenapplikationen davon ausgegangen werden, dass unter normalen Betriebsbedingungen die codierten Daten fehlerfrei sind. Fehler in den Daten werden dabei durch sehr seltene Hardware-Fehler verursacht. Durch das erfindungsgemäße Verfahren und die erfindungsgemäße Vorrichtung kann die Performance eines Tachographen gesteigert werden, indem die Datencodierung und die Überprüfung der codierten Datenwörter auf Fehler unter Verwendung einer MAC-Einheit des Mikrocontrollers drastisch beschleunigt werden. Bei dem Mikrocontroller 2 kann es sich um einen beliebigen Mikrocontroller handeln, der über einen Bus 4 mit einer beliebigen Busbandbreite von beispielsweise 8, 16 oder 32 Bit mit einem Speicher 5 verbunden ist.

**Patentansprüche**

1. Verfahren zum Codieren und Speichern mindestens eines Datenwortes (DW),
   wobei für das aus Datensymbolen (d) bestehende Datenwort (DW) ein aus Codesymbolen (c) bestehendes Codewort (CW) berechnet wird, welches in ein abspeicherbares Codewort (CW') transformiert wird, wenn mindestens ein Codesymbol (c) des berechneten Codewortes (CW) nicht über einen Bus (4) mit einer vorgegebenen Busbreite (w) in einen Speicher (5) abspeicherbar ist.

2. Verfahren nach Anspruch 1,
wobei das Datenwort (DW) zur Berechnung einer aus Prüfsymbolen (r) bestehenden Prüfsumme (PS) mittels einer Codiervorschrift (CV) codiert wird.

3. Verfahren nach Anspruch 2,
wobei die Codesymbole (c) des berechneten Codewortes (CW) die Datensymbole (d) des Datenwortes (DW) und die Prüfsymbole (r) der Prüfsumme (PS) umfassen.

4. Verfahren nach Anspruch 3,
wobei das Codewort (CW) mittels einer vorgegebenen Transformationsvorschrift (TV) in das transformierte Codewort (CW') transformiert wird, wenn mindestens ein Codesymbol (c) des berechneten Codewortes (CW) einen Wert größer als $2^w$-1 aufweist.

5. Verfahren nach Anspruch 4,
wobei zur Transformation des Codewortes (CW) diejenigen Codesymbole (c), deren Werte jeweils größer als $2^w$-1 sind, mittels der vorgegebenen Transformationsvorschrift (TV) auf Codesymbole (c') abgebildet werden, deren Werte jeweils kleiner oder gleich $2^w$-1 sind.

6. Verfahren nach Anspruch 1,
wobei das transformierte Codewort (CW') in den Speicher (5) abgespeichert wird.

7. Verfahren nach Anspruch 1,
wobei das berechnete Codewort (CW) untransformiert in den Speicher (5) abgespeichert wird, wenn alle Codesymbole (c) des berechneten Codewortes (CW) einen Wert kleiner oder gleich $2^w$-1 aufweisen.

8. Verfahren nach Anspruch 1,
wobei das aus Datensymbolen (d) bestehende Datenwort (DW) durch ein Hilfsdatensymbol (e) erweitert wird.

9. Verfahren nach Anspruch 2,
wobei die Codiervorschrift (CV) eine Multiplikation des Datenwortes (DW) mit einer Codiermatrix (CM) ist.

10. Verfahren nach Anspruch 9,
wobei das erweiterte Datenwort (DW, e) mit einer Codiermatrix (CM) zur Berechnung einer Prüfsumme (PS) multipliziert wird.

11. Verfahren nach Anspruch 10,
wobei das berechnete Codewort (CW) das erweiterte Datenwort (DW, e) und die Prüfsumme (PS) aufweist.

12. Verfahren nach Anspruch 11,
wobei, wenn mindestens ein Codesymbol (c) des berechneten Codewortes (CW) einen Wert größer als $2^w$-1 aufweist, das Hilfsdatensymbol (e) solange verändert und das durch das veränderte Hilfsdatensymbol (e') erweiterte Datenwort (DW, e') mit der Codiermatrix (CM) zur Berechnung eines transformierten Codewortes (CW') solange multipliziert wird, bis jedes Codesymbol (c') des transformierten Codewortes (CW') einen Wert kleiner oder gleich $2^w$-1 hat.

13. Verfahren nach Anspruch 12,
wobei der Wert des Hilfsdatensymbols (e) schrittweise inkrementiert wird.

14. Verfahren nach Anspruch 9,
wobei alle Koeffizienten ($q_{ij}$) der Codiermatrix (CM) einen Wert kleiner als $2^w$ aufweisen.

15. Verfahren nach Anspruch 9,
wobei die Multiplikation des Datenwortes (DW) mit der Codiermatrix (CM) unter Verwendung einer MAC-Einheit erfolgt.

16. Verfahren nach Anspruch 15,
wobei unter Verwendung der MAC-Einheit (3) die Prüfsymbole (r) in Abhängigkeit von den Koeffizienten ($q_{ij}$) der

Codiermatrix (CM) und den Datensymbolen (d) des Datenwortes (DW) wie folgt berechnet werden:

$$\mathtt{r_i} \;=\; \sum_j q_{ij} \cdot d_j \bmod p$$

wobei p ein Codeparameter ist.

**17.** Verfahren nach Anspruch 16,
wobei der Codeparameter (p) durch eine Primzahl mit $p > 2^w$ gebildet wird.

**18.** Verfahren nach Anspruch 1,
wobei das Codewort (CW) aus dem Datenwort (DW) mittels eines Generatorpolynoms (g) berechnet wird.

**19.** Verfahren nach Anspruch 14 und 18,
wobei die Koeffizienten ($q_{ij}$) der Codiermatrix (CM) in Abhängigkeit von dem Generatorpolynom (g) berechnet werden.

**20.** Verfahren nach Anspruch 19,
wobei das Generatorpolynom (g) ein Generatorpolynom eines linearen fehlerkorrigierenden Codes ist.

**21.** Verfahren nach Anspruch 20,
wobei der lineare fehlerkorrigierende Code ein Reed-Solomon-Code ist.

**22.** Verfahren nach Anspruch 20,
wobei der lineare fehlerkorrigierende Code ein BCH-Code ist.

**23.** Vorrichtung (1) zum Codieren und Speichern mindestens eines Datenwortes (DW),
wobei für das aus Datensymbolen (d) bestehende Datenwort (DW) ein aus Codesymbolen (c) bestehendes Codewort (CW) berechnet wird, welches in ein abspeicherbares Codewort (CW') transformiert wird, wenn mindestens ein Codesymbol (c) des berechneten Codewortes (CW) nicht über einen Bus (4) mit einer vorgegebenen Busbreite (w) in einen Speicher (5) abspeicherbar ist.

**24.** Vorrichtung nach Anspruch 23,
wobei die Vorrichtung (1) eine MAC-Einheit (3) aufweist, so dass unter Verwendung der MAC-Einheit das Datenwort (DW) mit einer Codiermatrix (CM) zur Berechnung einer aus Prüfsymbolen (r) bestehenden Prüfsumme (PS) multipliziert wird.

**25.** Verwendung der Vorrichtung nach Anspruch 23,
in einem digitalen Tachographen.

# FIG 1

# FIG 2

$q_{ij}$

$d_j$

w

w

Multiplikator — 3-1

2w

ADD — 3-2

Register — 3-3

2w+r

MAC
Einheit

3

# FIG 3

```
        ┌──────────────────┐
        │   Einlesen DW    │── S1
        └──────────────────┘
                 │
                 ▼
        ┌──────────────────┐
        │  CM · DW = PS    │── S2
        │  CW = (DW, PS)   │
        └──────────────────┘
                 │
                 ▼         S3
        ⬡ alle r; ∈ PS ⬡
   ja ──┤   ≤ 2^W-1 ?   ├── nein
        └───────────────┘
        │                      │
        ▼                      ▼
 ┌──────────────┐     ┌──────────────────┐
 │  Speichern   │  S5─│  Transformieren  │
 │   von CW     │     │  von CW zu CW'   │
 └──────────────┘     └──────────────────┘
        │                      │
        S4                     ▼
                     ┌──────────────────┐
                  S6─│    Speichern     │
                     │    von CW'       │
                     └──────────────────┘
```

# FIG 4

Initialisiere
Hilfsdateisymbol e — S1

↓

Einlesen DW — S2

↓

$CM \cdot (DW, e) = PS$
$CW = (DW, e, PS)$ — S3

↓

S4

alle $r_i \in PS$
$\leq 2^W - 1$ ?

ja → Speichern von CW — S5

nein → Inc e — S6